# EUROPÄISCHE PATENTSCHRIFT

(11) **EP 2 098 548 B1**
(45) Veröffentlichungstag und Bekanntmachung des Hinweises auf die Patenterteilung: **21.10.2009**
(21) Anmeldenummer: 08152325.0
(22) Anmeldetag: 05.03.2008
(51) Int. Cl.: C08G 18/28, C09J 175/04, C08G 65/336

(54) **Zusammensetzung mit verbesserter Haftung auf porösen Substraten**
Compound with improved adhesion to porous substrates
Composition à adhérence améliorée sur des substrats poreux

(43) Veröffentlichungstag der Anmeldung: 09.09.2009
(73) Patentinhaber: Sika Technology AG, 6340 Baar (CH)
(72) Erfinder: Teysseire, Raphael, 8105 Watt (CH)
(74) Vertreter: Sika Patent Attorneys

(56) Entgegenhaltungen:
- EP-A- 1 544 225
- WO-A-20/05059056
- WO-A-20/05108520

## Beschreibung

### Technisches Gebiet

Die vorliegende Erfindung betrifft das Gebiet der elastischen KlebStoffe, Dichtstoffe und Beschichtungen auf Basis silanfunktioneller Polymere.

### Stand der Technik

Feuchtigkeitshärtende Zusammensetzungen werden seit geraumer Zeit als elastische Klebstoffe, Dichtstoffe und Beschichtungen eingesetzt.

Für das Verkleben, Abdichten und Beschichten von porösen Substraten, insbesondere porösen, mineralischen Substraten wie Beton und dergleichen, auf welchen es bekanntermassen schwierig ist eine befriedigende Haftung mit elastischen Kleb-, Dichtstoffen und Beschichtungen zu erreichen, werden grösstenteils feuchtigkeitshärtende Zusammensetzungen auf Isocyanatbasis eingesetzt. Derartige Zusammensetzungen sind jedoch aus ökologischer und toxikologischer Sicht nicht für jede Anwendung geeignet.

Aus diesem Grund werden insbesondere für die Betonhaftung auch feuchtigkeitshärtende Zusammensetzungen auf der Basis von silanfunktionellen Polymeren herangezogen, wobei bei derartigen Zusammensetzungen die Haftung nach Wasserlagerung besonders problematisch ist. Ein Grund dafür ist, dass aufgrund der Kapillarwirkung in porösen Materialien, Wasser zwischen die Substratoberfläche und den Kleb- oder Dichtstoff gelangen kann und so die Haftung schwächen kann

Auf porösen Substraten, insbesondere porösen, mineralischen Substraten wie Beton, ist eine befriedigende Haftung von Kleb-, Dichtstoffen und Beschichtungen auf der Basis von silanfunktionellen Polymeren nur in Kombination mit Haftvermittlerzusammensetzungen, so genannten Primern, gewährleistet. Beispielsweise sind geeignete Haftvermittlerzusammensetzungen für derartige feuchtigkeitshärtende Zusammensetzungen beschrieben in JP 4076084.

EP 1 544 225 veröffentlicht eine Klebstoff/Dichtmittelzusammensetzung umfassend : ein silanfunktionelles Polymer, ein Organosilan sowie ein Zinnsalzkatalysator.

Aus unterschiedlichen Gründen kann es notwendig oder von bedeutendem Vorteil sein, beim Verkleben, Abdichten oder Beschichten auf Haftvermittlerzusammensetzungen in Form von Voranstrichen zu verzichten. So bringt beispielsweise die primerlose Verklebung neben einem Kostenvorteil, auch einen Zeitvorteil, da auf die Applikation und die Ablüftung der Haftvermittlerzusammensetzung verzichtet werden kann. Weiterhin weist die primerlose Verklebung auch ökologische Vorteile auf, da Primer sehr oft grossen Mengen an flüchtigen organischen Lösungsmitteln, so genannten VOCs (Volatile Organic Compounds), aufweisen.

### Darstellung der Erfindung

Aufgabe der vorliegenden Erfindung ist es daher, eine Zusammensetzung auf Basis von silanfunktionellen Polymeren zur Verfügung zu stellen, welche sich für die primerlose Verklebung, Abdichtung und Beschichtung von porösen Substraten, insbesondere von porösen, mineralischen Substraten wie Beton und dergleichen eignet.

Überaschenderweise wurde nun gefunden, dass Zusammensetzungen gemäss Anspruch 1 diese Aufgabe lösen.

Die erfindungsgemässe Zusammensetzung weist ohne den Einsatz von Haftvermittlerzusammensetzungen eine gute und dauerhafte Haftung auf porösen Substraten, insbesondere auf porösen, mineralischen Substraten wie Beton und dergleichen auf. Überraschenderweise und für den Fachmann nicht nahe liegend weist die erfindungsgemässe Zusammensetzung auch nach längerer Wasserlagerung gute Hafteigenschaften auf.

Weiterhin weisen erfindungsgemässe Zusammensetzungen im Vergleich zu herkömmlichen Systemen eine stark verbesserte Temperaturbeständigkeit im ausgehärteten Zustand auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung umfassend
a) mindestens ein silanfunktionelles Polymer **P**;
b) mindestens ein Organosilan, welches mindestes ein Schwefelatom aufweist; sowie
c) mindestens ein Organotitanat.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyhamstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Der Begriff "Organotitanat" bezeichnet im vorliegenden Dokument Verbindungen, welche mindestens einen über ein Sauerstoffatom an das Titanatom gebundenen Liganden aufweisen.

Als "mehrzähniger Ligand" bzw. Chelatligand wird im vorliegenden Dokument ein Ligand verstanden, welcher mindestens zwei freie Elektronenpaare besitzt und mindestens zwei Koordinationsstellen des Zentralatoms besetzen kann. Ein zweizähniger Ligand vermag es entsprechend zwei Koordinationsstellen eines Zentralatoms zu besetzen.

Der Begriff "Primer" ist dem Fachmann bestens bekannt und bezeichnet im vorliegenden Dokument eine dünne Schicht, von typischerweise dünner als 1 mm, insbesondere zwischen 1 und 200 µm, bevorzugt zwischen 1 und 100 µm, einer Haftvermittlerzusammensetzung, welche als Haftvoranstrich auf die Oberfläche eines Substrats appliziert wird und, gegebenenfalls nach dem Ablüften, mit einer haftenden Zusammensetzung kontaktiert wird, wobei sie zu einer Verbesserung der Haftung der Zusammensetzung auf dem Substrat führt. Entsprechend wird der Begriff "primerlos" für das das Verkleben, Abdichten oder Beschichten von Substraten ohne deren Vorbehandlung mit einem Primer verwendet.

Unter der "Molekulargewicht" versteht man im vorliegenden Dokument stets das Molekulargewichtsmittel Mₙ (Zahlenmittel).

Die erfindungsgemässe Zusammensetzung enthält mindestens ein silanfunktionelles Polymer **P**, welches insbesondere Endgruppen der Formel (I) aufweist.

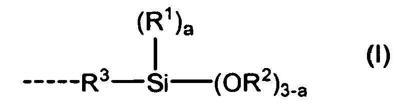

Dabei steht der Rest R¹ für eine Alkylgruppe mit 1 bis 8 C-Atomen, insbesondere für eine Methyl- oder für eine Ethylgruppe.

Der Rest R² steht für eine Acyl- oder Alkylgruppe mit 1 bis 5 C-Atomen, insbesondere für eine Methyl- oder für eine Ethyl- oder für eine Isopropylgruppe.

Der Rest R³ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen.

Der Index a steht für einen Wert von 0 oder 1 oder 2, insbesondere für einen Wert von 0.

Innerhalb einer Silangruppe der Formel (I) stehen R¹ und R² jeweils unabhängig voneinander für die beschriebenen Reste. So sind beispielsweise auch Verbindungen der Formel (I) möglich, welche Ethoxy-Dimethoxy-Alkylsilane (R² = Methyl, R² = Methyl, R² = Ethyl) darstellen.

In einer ersten Ausführungsform ist das silanfunktionelle Polymer **P** ein silanfunktionelles Polyurethanpolymer **P1**, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan **AS** der Formel (la), 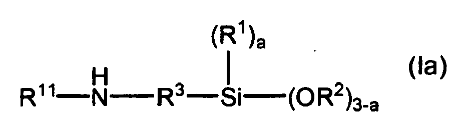 wobei R¹, R², R³ und a bereits vorhergehend beschrieben worden sind, und R¹¹ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (VI) steht.

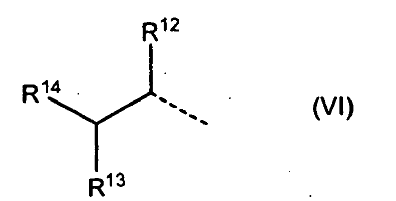

Dabei stehen die Reste R¹² und R¹³, unabhängig voneinander, für ein Wasserstoffatom oder für einen Rest aus der Gruppe umfassend -R¹⁵, -CN und -COOR¹⁵.

Der Rest R¹⁴ steht für ein Wasserstoffatom oder für einen Rest aus der Gruppe umfassend -CH₂-COOR¹⁵, -COOR¹⁵, CONHR¹⁵, -CON(R¹⁵)₂, -CN, -NO₂, -PO(OR¹⁵)₂, -SO₂R¹⁵ und -SO₂OR¹⁵.

Der Rest R¹⁵ steht für einen, gegebenenfalls mindestens ein Heteroatom enthaltenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestem, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder lsopropoxygruppen anstelle der Methoxygruppen am Silicium. Als Aminosilane **AS** besonders geeignet sind sekundäre Aminosilane, insbesondere Aminosilane **AS**, bei denen R¹¹ in Formel (Ia) verschieden von H ist. Bevorzugt sind die Michael-artigen Addukte, insbesondere N-(3-Trimethoxysilyl-propyl)-amino-bemsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminiertenAcrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate, verwendet werden.

Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-triethyl-5-isocyanatomethylcyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Beispielsweise sind geeignete silanfunktionelle Polymere P1 kommerziell erhältlich unter dem Handelsnamen Polymer ST50 von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.

Als Isocyanatosilan **IS** geeignet sind Verbindungen der Formel (Ib). 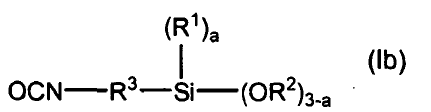 wobei R¹, R², R³ und a bereits vorhergehend beschrieben wurden.

Beispiele für geeignete Isocyanatosilane **IS** der Formel (Ib) sind 3-Iso-cyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (Ib). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3**, welches erhältlich ist durch eine Hydrosilylierungsreaktion von Polymeren, mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete silanfunktionelle Polymere **P3** kommerziell erhältlich unter den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Üblicherweise ist das silanfunktionelle Polymer **P** in einer Menge von 10 bis 80 Gew.-%, bevorzugt in einer Menge von 15 bis 60 Gew.-%, bezogen auf die gesamte Zusammensetzung, vorhanden.

Die erfindungsgemässe Zusammensetzung umfasst weiterhin mindestens ein Organosilan, welches mindestens ein Schwefelatom aufweist. Insbesondere sind derartige Organosilane ausgewählt aus der Gruppe bestehend aus Organosilanen der Formeln (II), (III) und (IV).

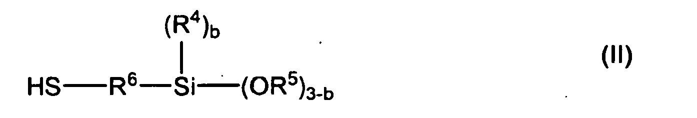

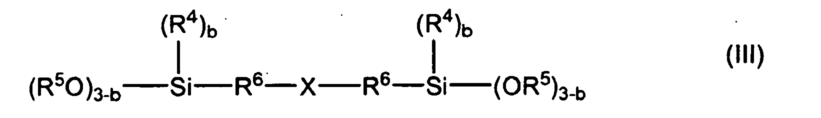

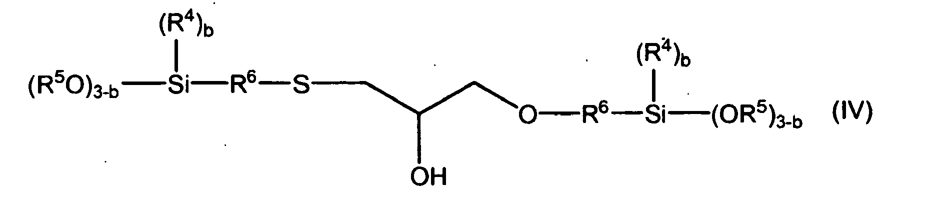

Dabei steht der Rest R⁴ für eine Alkylgruppe mit 1 bis 8 C-Atomen, insbesondere für eine Methylgruppe.

Der Rest R⁵ steht für eine Alkylgruppe mit 1 bis 5 C-Atomen, insbesondere für eine Methyl-, eine Ethyl- oder für eine Isopropylgruppe, oder für eine Acylgruppe, insbesondere für eine Acetylgruppe.

Der Rest R⁶ steht für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

X steht für S, S₂ oder für S₄ und b steht für einen Wert von 0, 1 oder 2.

Insbesondere ist das Organosilan, welches mindestens ein Schwefelatom aufweist, ein Organosilan der Formel (II), wobei der Rest R⁵ für eine Methyl- oder für eine Ethylgruppe steht, der Rest R⁶ für eine lineare Alkylengruppe mit 1 bis 10, insbesondere mit 3, C-Atomen steht und b für einen Wert von 0 steht.

Als Organosilane der Formel (II) sind beispielsweise diejenigen geeignet, die ausgewählt sind aus der Gruppe bestehend aus 3-Mercaptopropyltriethoxysilan, 3-Mercaptopropyltrimethoxysilan, 3-Mercaptopropyl-methyldimethoxysilan und 3-Acylthiopropyltrimethoxysilan.

Als Organosilane der Formel (III) sind beispielsweise Bis(trialkoxysilyl-propyl)polysulfide wie 4,4,15,15-Tetraethoxy-3,16-dioxa-8,9,10,11-tetrathia-4-15-disilaoctadecan oder Bis(triethoxysilylpropyl)disulfid geeignet. Beispielsweise ist ein derartiges Organosilan unter dem Handelsnamen Si 69^{®} kommerziell erhältlich von der Firma Evonik Degussa GmbH, Deutschland.

Als Organosilane der Formel (IV) eignen sich insbesondere die Reaktionsprodukte von Organosilanen der Formel (II), beispielsweise von 3-Mercaptopropyltrimethoxysilan, mit Glycidyloxyalkyltrialkoxysilanen, beispielsweise mit 3-Glycidyloxypropyltrimethoxysilan.

Geeignete Organosilane der Formel (II) sind beispielsweise kommerziell erhältlich unter dem Handelsnamen Dynasilan^{®} MTMO von Evonik Degussa GmbH, Deutschland, oder unter dem Handelsnamen Silquest® A-189 von der Firma Momentive Performance Materials Inc., USA.

Der Anteil des Organosilans beträgt vorzugsweise 0.1 bis 7 Gew.-%, insbesondere 0.2 bis 4 Gew.-%, bevorzugt 0.4 bis 2 Gew.-%, der gesamten Zusammensetzung.

Weiterhin umfasst die erfindungsgemässe Zusammensetzung mindestens ein Organotitanat. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe.

Besonders geeignete Organotitanate weisen mindestens einen mehrzähnigen Liganden, auch Chelatliganden genannt, auf. Insbesondere ist der mehrzähnige Ligand ein zweizähniger Ligand.

Besonders geeignete Organotitanate sind jene der Formel (V).

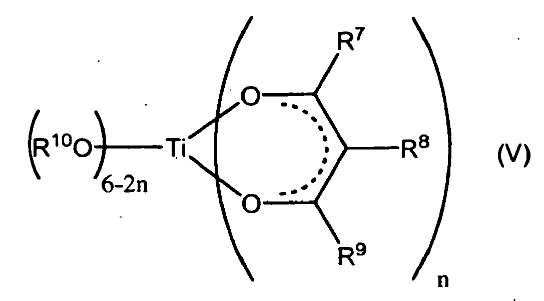

Dabei steht der Rest R⁷ für ein Wasserstoffatom oder für eine lineare oder verzweigte Alkylgruppe mit 1 bis 8 C-Atomen, insbesondere für eine Methylgruppe.

Der Rest R⁸ steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R⁹ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Der Rest R¹⁰ steht für einen linearen oder verzweigten Alkylrest mit 1 bis 20 C-Atomen, insbesondere für einen Isobutyl- oder für einen Isopropylrest.

n steht für einen Wert von 1 oder 2, insbesondere für 2.

Bevorzugt sind Organotitanate der Formel (V), wobei der Rest R⁷ für eine Methylgruppe, der Rest R⁸ für ein Wasserstoffatom, der Rest R⁹ für eine Methylgruppe oder Methoxy- oder Ethoxygruppe und der Rest R¹⁰ für einen Isobutyl- oder für einen Isopropylrest steht.

Selbstverständlich ist es möglich oder in gewissen Fällen sogar bevorzugt, Mischungen verschiedener Organotitanate einzusetzen.

Geeignete Organotitanate sind beispielsweise unter den Handelsnamen Tyzor^{®} AA, GBA, GBO, AA-75, AA-65, AA-105, DC, BEAT, IBAY kommerziell erhältlich von der Firma DuPont, USA.

Der Anteil des Organotitanats beträgt vorzugsweise 0.1 bis 10 Gew.-%, insbesondere 0.1 bis 4 Gew.-%, bevorzugt 0.1 bis 3 Gew.-%, der gesamten Zusammensetzung.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Düsodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Hamstoffverbindungen, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Grundsätzlich ist es nicht nötig in der erfindungsgemässen Zusammensetzung zusätzliche Katalysatoren einzusetzen. Werden dennoch Katalysatoren eingesetzt, eignen sich beispielsweise Metallkatalysatoren in Form von Organozinnverbindungen wie Dibutylzinndilaurat und Dibutylzinndiacetylacetonat, Bismut-organische Verbindungen oder Bismut-Komplexe, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren.

Es ist vorteilhaft, alle genannten, in der Zusammensetzung gegebenenfalls vorhandenen Bestandteile, insbesondere einen Füllstoff und einen Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird unter Ausschluss von Feuchtigkeit hergestellt und aufbewahrt. Die Zusammensetzung ist lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als Klebstoff, Dichtstoff oder als Zusammensetzung zum Herstellen von Beschichtungen.

Insbesondere eignet sich die erfindungsgemässe Zusammensetzung als Klebstoff und/oder als Dichtstoff für das primerlose Verkleben und/oder Abdichten und/oder Beschichten von porösen Substraten, insbesondere von porösen, mineralischen Substraten wie beispielsweise Beton. Es hat sich gezeigt, dass erfindungsgemässe Zusammensetzungen insbesondere zu einer Verbesserung der Haftung nach Wasserlagerung führen. Bei der Verklebung oder dem Abdichten von porösen Substraten wie Beton, ist die Wasserlagerung bisher stets problematisch gewesen. Ein Grund dafür ist, dass durch die Kapillarwirkung in porösen Materialien Wasser zwischen die Substratoberfläche und den Kleb- oder Dichtstoff gelangen kann und so die Haftung beeinträchtigen kann. Ausserdem verbessert sich bei erfindungsgemässen Zusammensetzungen die Temperaturstabilität im ausgehärteten Zustand.

Weiterhin umfasst die Erfindung ein Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser, insbesondere in der Form von Luftfeuchtigkeit;
wobei die Substrate **S1** und **S2** gleich oder verschieden voneinander sind.

Weiterhin umfasst die Erfindung ein Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2**;
ii') Aushärtung der Zusammensetzung mittels Wasser, insbesondere in der Form von Luftfeuchtigkeit;
wobei die Substrate **S1** und **S2** gleich oder verschieden voneinander sind.

Insbesondere ist mindestens eines der Substrate **S1** oder **S2** Beton, Mörtel, Backstein, Ziegel, Gips, ein Naturstein wie Granit oder Marmor, Glas, Glaskeramik, Metall oder Metalllegierung, Holz, Kunststoff oder Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Erfindungsgemässe Zusammensetzungen weisen insbesondere auch ohne die Verwendung von Haftvermittlerzusammensetzungen, auch Primer genannt, eine gute Haftung auf Substraten, insbesondere auf porösen Substraten, bevorzugt auf porösen mineralischen Substraten wie Beton, auf.

Weiterhin umfasst die vorliegende Erfindung einen mit einer beschriebenen Zusammensetzung verklebten, abgedichteten und/oder beschichteten Artikel, welcher durch eines der beschriebenen Verfahren erhalten wird.

Bei diesen Artikeln handelt es sich vorzugsweise um ein Bauwerk, insbesondere ein Bauwerk des Hoch- oder Tiefbaus.

### Beispiele

### Testverfahren

Die **Haftung** wurde folgendermassen bestimmt:

Zur Prüfung der Haftung wurde DIN-Beton, kommerziell erhältlich von der Firma Rocholl GmbH, Deutschland, benützt. Die Oberfläche wurde mit einer Stahlbürste gereinigt und anschliessend mit Pressluft vom Staub befreit. Dann wurden je zwei Raupen der jeweiligen Zusammensetzung aus einer Kartusche auf jedes Substrat aufgetragen. Das mit den Raupen beschichtete Substrat wurde dann während 7 Tagen im Normklima (23 ± 1 °C, 50 ± 5 % relative Luftfeuchtigkeit) gelagert, worauf die Haftung ein erstes Mal geprüft wurde (erste Raupe). Anschliessend wurde das Substrat mit der applizierten Zusammensetzung vollständig in Wasser eingetaucht bei Raumtemperatur gelagert. Die Haftung wurde nun täglich an einem Teil der Raupe geprüft.

Zur Prüfung der Haftung wurde das Substrat mittels einer Klemme am Tisch befestigt. Die ausgehärtete Raupe wurde jeweils an einem Ende knapp über der Oberfläche des Substrats (Klebefläche) eingeschnitten und das eingeschnittene Ende der Raupe wurde von Hand festgehalten und dann vorsichtig und langsam, schälend in Richtung des anderen Raupenendes, von der Oberfläche gezogen. Wenn dabei die Haftung so stark war, dass das Raupenende beim Ziehen abzureissen drohte, wurde mittels einer scharfen Klinge (Cutter) ein Schnitt senkrecht zur Raupenziehrichtung bis auf die Oberfläche des Substrats angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Substrat gezogen bzw. geschnitten. Die Bewertung der Hafteigenschaften erfolgte anhand des nach dem Abziehen der Raupe auf der Substratoberfläche zurückbleibenden ausgehärteten Klebstoffs (Kohäsionsbruch) durch Abschätzen des kohäsiven Anteils der Haftfläche gemäss folgender Skala:
1 = mehr als 95% Kohäsionsbruch
2 = 75 bis95 % Kohäsionsbruch
3 = 25 bis 75% Kohäsionsbruch
4 = weniger als 25% Kohäsionsbruch

Testresultate mit Kohäsionsbruchwerten von weniger als 75%, also Werte von 3 und 4, gelten als ungenügend. Proben, deren Hafteigenschaften mit dem Wert 4 bewertet wurden, also jene mit weniger als 25% Kohäsionsbruch, wurden nicht weiter berücksichtigt und sind in der Tabelle mit "*n.b.*" für "nicht bestimmt" angegeben.

. Die **Zugfestigkeit,** die **Bruchdehnung,** und der **E-Modul** bei 0 bis 100 % Dehnung wurden nach DIN EN 53504 (Zuggeschwindigkeit: 200 mm/min) an während 14 Tagen bei 23 °C und 50% relativer Luftfeuchtigkeit ausgehärteten Filmen mit einer Schichtdicke von 2 mm bestimmt.

Die **Shore A-Härte** wurde bestimmt nach DIN 53505.

### Herstellung des silanfunktionellen Polyurethanpolymers (P1-1)

Unter Stickstoffatmosphäre wurden 1000g Acclaim^{®} Polyol 12200 (Bayer MaterialScience AG, Deutschland; low monol Polyoxypropylendiol; OH-Zahl 11.0 mg KOH/g; Wassergehalt ca. 0.02 Gew.-%), 38.4g Isophorondiisocyanat (IPDI; Vestanat^{®} IPDI, Evonik Degussa GmbH, Deutschland), 270.1 g Diisodecylphthalat (DIDP; Palatinol^{®} Z, BASF SE, Deutschland) und 0.12 g Din-butyl-zinndilaurat (Metatin^{®} K 712, Acima AG, Schweiz) unter stetigem Rühren auf 90°C aufgeheizt und auf dieser Temperatur belassen, bis der titrimetrisch bestimmte Gehalt an freien Isocyanatgruppen einen Wert von 0.40 Gew.-% erreicht hatte. Anschliessend wurden 39.5 g N-(3-Trimethoxysilylpropyl)-amino-bernsteinsäure-diethylester eingemischt und die Mischung während 4 Stunden bei 90°C gerührt, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 80 %).

N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, Momentive Performance Materials Inc., USA) wurden vorgelegt. Unter gutem Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### MS-Prepolymer (P3-1)

Prepolymer S203H ist erhältlich bei Kaneka Corporation, Japan.

### Herstellung der Harnstoff-Verdicker-Paste

In einem Vakuummischer wurden 1000 g Diisodecylphthalat (Palatinol^{®} Z) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Die Harnstoff-Verdicker-Paste enthält 20 Gew.-% Harnstoff-Verdicker in 80 Gew.-% Diisodecylphthalat.

### Herstellung der Klebstoffe

### Herstellen der Grundformulierung

In einem Vakuummischer wurden entsprechend der in Tabelle 1 angegebenen Gewichtsanteilen das Polymer, Vinyltrimethoxysilan (Dynasylan^{®} VTMO, Evonik Degussa GmbH, Deutschland), Titanoxid (Kronos^{®} 2430, Kronos Titan GmbH, Deutschland), Harnstoff-Verdicker-Paste, gemahlene Kreide (Omya^{®} 5GU, Omya GmbH, Deutschland), wahlweise N-2-aminoethyl-3-aminopropyltrimethoxysilane (Dynasylan^{®} DAMO-T, Evonik Degussa GmbH, Deutschland) oder Mercaptosilan (Dynasylan^{®} MTMO, Evonik Degussa GmbH, Deutschland, und wahlweise DBTDL, Metatin^{®} K712, und DIDP (Palatinol^{®} Z) oder Organotitanat (Tyzor^{®} IBAY, DuPont, USA) zu einer homogenen Paste verarbeitet, welche unter Ausschluss von Feuchtigkeit aufbewahrt wurde.

### Resultate

**Tabelle 1 Zusammensetzung in Gewichtsanteilen [Gew.-%] und Resultate;**

| | | ***Ref. 1*** | ***B1*** | ***Ref. 2*** | ***B2*** |
|---|---|---|---|---|---|
| ***P1-1*** | | 26.9 | 26.9 | | |
| ***P3-1*** | | | | 26.9 | 26.9 |
| Dynasylan VTMO | | 0.5 | 0.5 | 0.5 | 0.5 |
| Kronos 2430 | | 2.0 | 2.0 | 2.0 | 2.0 |
| Harnstoff-Verdicker-Paste | | 19.8 | 19.8 | 19.8 | 19.8 |
| Omya 5 GU | | 48.8 | 48.8 | 48.8 | 48.8 |
| Dynasylan DAMO-T | | 0.5 | | 0.5 | |
| Dynasylan MTMO | | | 1 | | 1 |
| DIDP Palatinol Z | | 1.3 | | 1.3 | |
| DBTDL Metatin K712 | | 0.2 | | 0.2 | |
| Titanat Tyzor IBAY | | | 1 | | 1 |

| **Haftung auf DIN-Beton** | | | | | |
|---|---|---|---|---|---|
| 7d Normklima | | 1 | 1 | 1 | 1 |
| +1d H₂O | | 4 | 1 | 1 | 1 |
| +2d H₂O | | *n.b.* | 1 | 3 | 1 |
| +3d H₂O | | *n.b.* | 1 | 4 | 1 |
| +4d H₂O | | *n.b.* | 1 | *n.b.* | 1 |
| +5d H₂O | | *n.b.* | 1 | *n.b*. | 1 |
| +6d H₂O | | *n. b.* | 1 | *n. b.* | 3 |
| +7d H₂O | | *n.b.* | 1 | *n.b.* | 3 |
| +8d H₂O | | *n.b.* | 1 | *n. b.* | *n. b.* |
| +9d H₂O | | *n.b.* | 1 | *n.b.* | *n.b.* |
| 14d Normklima | | 1 | 1 | 1 | 1 |
| +1d H₂O | | 1 | 1 | 1 | 1 |
| +2d H₂O | | 2 | 1 | 1 | 1 |
| +3d H₂O | | 4 | 1 | 3 | 1 |
| +4d H₂O | | *n.b.* | 1 | 3 | 1 |
| +5d H₂O | | *n.b.* | 1 | *n.b.* | *n.b.* |
| +6d H₂O | | *n.b.* | 1 | *n.b.* | *n.b.* |
| +7d H₂O | | *n.b.* | 1 | 4 | 3 |
| +8d H₂O | | *n.b.* | 1 | *n.b.* | *n.b*. |
| +9d H₂O | | *n. b.* | 1 | *n.b.* | *n. b.* |

| **Mechanische Eigenschaften**²⁾ | | | | | |
|---|---|---|---|---|---|
| Zugfestigkeit | [MPa] | 1.10 | 1.15 | 1.07 | 0.69 |
| Bruchdehnung | [%] | 259 | 394 | 316 | 385 |
| E-Modul 0-100% | [MPa] | 0.40 | 0.49 | 0.36 | 0.28 |
| Härte Shore A | | 25 | 31 | 21 | 15 |

| | | | | | |
|---|---|---|---|---|---|
| ¹⁾ Der Anteil an Titanat ***(B1*** und ***B2)*** ist so gewählt, dass die Aushärtungsgeschwindigkeiten der Zusammensetzungen mit denen von ***Ref. 1*** und ***Ref. 2*** vergleichbar sind. ²⁾ Nach 14 Tagen Lagerung bei 23°C und 50% relativer Luftfeuchtigkeit. | | | | | |

## Patentansprüche

1. Zusammensetzung umfassend
a) mindestens ein silanfunktionelles Polymer P;
b) mindestens ein Organosilan, welches mindestens ein Schwefelatom aufweist; sowie
c) mindestens ein Organotitanat.

2. Zusammensetzung gemäss Anspruch 1, **dadurch gekennzeichnet, dass** das silanfunktionelle Polymer P Endgruppen der Formel (I)aufweist 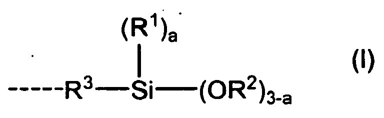 wobei
R¹ für eine Alkylgruppe mit 1 bis 8 C-Atomen, insbesondere für eine Methyl- oder für eine Ethylgruppe, steht;
R² für eine Acyl- oder Alkylgruppe mit 1 bis 5 C-Atomen, insbesondere für eine Methyl- oder für eine Ethyl- oder für eine Isopropylgruppe, steht;
R³ für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen, steht; und
a für einen Wert von 0 oder 1 oder 2, insbesondere für 0, steht.

3. Zusammensetzung gemäss einem der vorhergehenden Ansprüche, **dadurch gekennzeichnet, dass** Organosilan, welches mindestens ein Schwefelatom aufweist, ausgewählt ist aus der Gruppe bestehend aus Organosilanen der Formel (II), Organosilanen der Formel (III) und Organosilanen der Formel (IV) 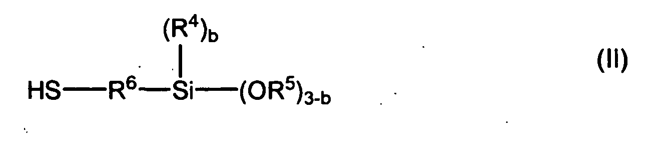 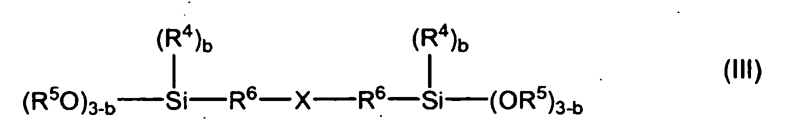 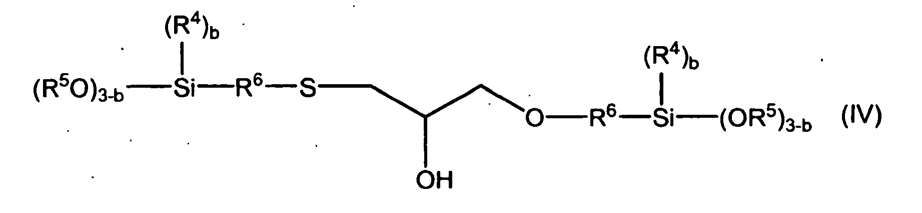 wobei
der Rest R⁴ für eine Alkylgruppe mit 1 bis 8 C-Atomen, insbesondere für eine Methylgruppe steht;
der Rest R⁵ für eine Alkylgruppe mit 1 bis 5 C-Atomen, insbesondere für eine Methyl- oder eine Ethyl- oder für eine Isopropylgruppe, oder für eine Acylgruppe, insbesondere für eine Acetylgruppe steht;
der Rest R⁶ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
X für S oder für S₂ oder für S₄ steht; und
b für einen Wert von 0 oder 1 oder 2 steht.

4. Zusammensetzung gemäss Anspruch 3, **dadurch gekennzeichnet, dass** das Organosilan, welches mindestens ein Schwefelatom aufweist, ein Organosilan der Formel (II) ist,
wobei
der Rest R⁵ für eine Methyl- oder für eine Ethylgruppe steht;
der Rest R⁶ für eine lineare Alkylengruppe mit 1 bis 10, insbesondere mit 3, C-Atomen steht; und
b für einen Wert von 0 steht.

5. Zusammensetzung gemäss einem der vorhergehenden Ansprüche, **dadurch gekennzeichnet, dass** das Organotitanat mindestens einen mehrzähnigen Liganden aufweist.

6. Zusammensetzung gemäss Anspruch 5, **dadurch gekennzeichnet, dass** das Organotitanat ein Organotitanat der Formel (V) ist 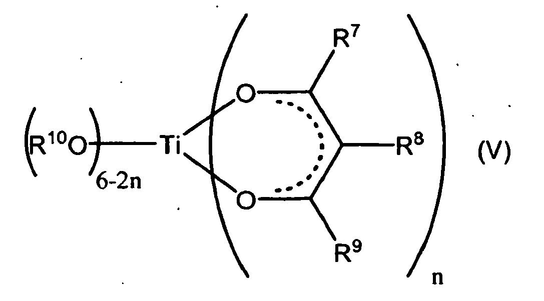 wobei
der Rest R⁷ für ein Wasserstoffatom oder für eine lineare oder verzweigte Alkylgruppe mit 1 bis 8 C-Atomen, insbesondere für eine Methylgruppe, steht;
der Rest R⁸ für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom, steht;
der Rest R⁹ für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen, steht;
der Rest R¹⁰ für einen linearen oder verzweigten Alkylrest mit 1 bis 20 C-Atomen, insbesondere für einen Isobutyl- oder für einen Isopropylrest, steht; und
n für einen Wert von 1 oder 2, insbesondere für 2, steht.

7. Zusammensetzung gemäss einem der vorhergehenden Ansprüche, **dadurch gekennzeichnet, dass** der Anteil des Organosilans 0.1 bis 7 Gew.-%, insbesondere 0.2 bis 4 Gew.-%, bevorzugt 0.4 bis 2 Gew.-%, der gesamten Zusammensetzung beträgt.

8. Zusammensetzung gemäss einem der vorhergehenden Ansprüche, **dadurch gekennzeichnet, dass** der Anteil des Organotitanats 0.1 bis 10 Gew.-%, insbesondere 0.1 bis 4 Gew.-%, bevorzugt 0.1 bis 3 Gew.-%, der gesamten Zusammensetzung beträgt.

9. Zusammensetzung gemäss einem der vorhergehenden Ansprüche, **dadurch gekennzeichnet, dass** die Zusammensetzung zusätzlich mindestens einen Füllstoff enthält.

10. Zusammensetzung gemäss einem der vorhergehenden Ansprüche, **dadurch gekennzeichnet, dass** der Anteil des Füllstoffs 10 bis 70 Gew.-%, insbesondere 15 bis 60 Gew.-%, bevorzugt 25 bis 60 Gew.-%, der gesamten Zusammensetzung beträgt.

11. Verwendung einer Zusammensetzung gemäss einem der Ansprüche 1 bis 10 als Klebstoff, Dichtstoff oder als Zusammensetzung zum Herstellen von Beschichtungen.

12. Verwendung gemäss Anspruch 11, als Klebstoff oder als Dichtstoff für das primerlose Verkleben oder Abdichten von porösen Substraten, insbesondere von porösen, mineralischen Substraten.

13. Verfahren des Verklebens zweier Substrate **S1** und **S2** umfassend die Schritte
i) Applikation einer Zusammensetzung gemäss einem der Ansprüche 1 bis 10 auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser, insbesondere in der Form von Luftfeuchtigkeit;
wobei die Substrate **S1** und **S2** gleich oder verschieden voneinander sind.

14. Verfahren der Abdichtung oder des Beschichtens umfassend die Schritte
i') Applikation einer Zusammensetzung gemäss einem der Ansprüche 1 bis 10 auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

15. Verfahren gemäss Anspruch 13 oder 14, **dadurch gekennzeichnet, dass** mindestens eines der Substrate **S1** oder **S2** Beton, Mörtel, Backstein, Ziegel, Gips, ein Naturstein wie Granit oder Marmor; Glas, Glaskeramik, Metall oder Metalllegierung, Holz, Kunststoff oder Lack ist.

16. Artikel, welcher nach einem Verfahren gemäss einem der Ansprüche 13 bis 15 verklebt, abgedichtet oder beschichtet wurde.

17. Artikel gemäss Anspruch 16 **dadurch gekennzeichnet, dass** der Artikel ein Bauwerk, insbesondere ein Bauwerk des Hoch- oder Tiefbaus ist.

## Claims

1. Composition comprising
a) at least one silane-functional polymer **P**;
b) at least one organosilane which contains at least one sulphur atom; and
c) at least one organotitanate.

2. Composition according to Claim 1, **characterized in that** the silane-functional polymer **P** contains end groups of the formula (I) 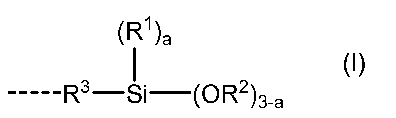 where
R¹ stands for an alkyl group having 1 to 8 C atoms, more particularly for a methyl or for an ethyl group;
R² stands for an acyl or alkyl group having 1 to 5 C atoms, more particularly for a methyl or for an ethyl or for an isopropyl group;
R³ stands for a linear or branched, optionally cyclic, alkylene group having 1 to 12 C atoms, optionally with aromatic fractions, and optionally with one or more heteroatoms, more particularly with one or more nitrogen atoms; and
a stands for a value of 0 or 1 or 2, more particularly for 0.

3. Composition according to either of the preceding claims, **characterized in that** organosilane which contains at least one sulphur atom is selected from the group consisting of organosilanes of the formula (II), organosilanes of the formula (III) and organosilanes of the formula (IV) 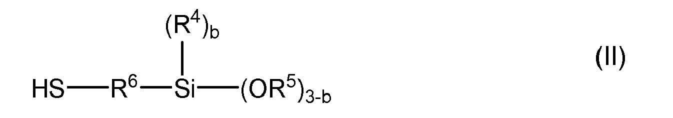 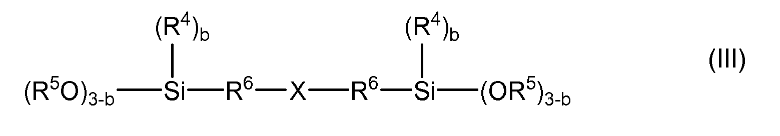 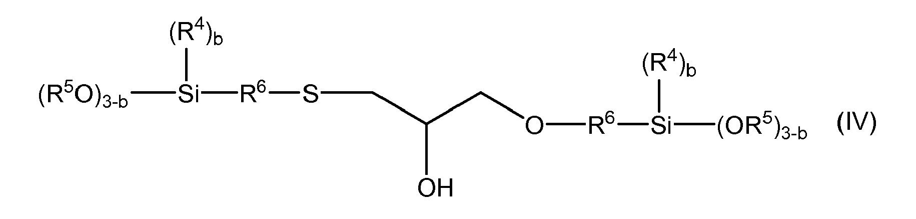 where
the radical R⁴ stands for an alkyl group having 1 to 8 C atoms, more particularly for a methyl group;
the radical R⁵ stands for an alkyl group having 1 to 5 C atoms, more particularly for a methyl or an ethyl or for an isopropyl group, or for an acyl group, more particularly for an acetyl group;
the radical R⁶ stands for a linear or branched, optionally cyclic, alkylene group having 1 to 20 C atoms, optionally with aromatic fractions, and optionally with one or more heteroatoms, more particularly nitrogen atoms;
X stands for S or for S₂ or for S₄; and
b stands for a value of 0 or 1 or 2.

4. Composition according to Claim 3, **characterized in that** the organosilane which contains at least one sulphur atom is an organosilane of the formula (II)
where
the radical R⁵ stands for a methyl or for an ethyl group;
the radical R⁶ stands for a linear alkylene group having 1 to 10, more particularly having 3, C atoms; and
b stands for a value of 0.

5. Composition according to any one of the preceding claims, **characterized in that** the organotitanate contains at least one multidentate ligand.

6. Composition according to Claim 5, **characterized in that** the organotitanate is an organotitanate of the formula (V) 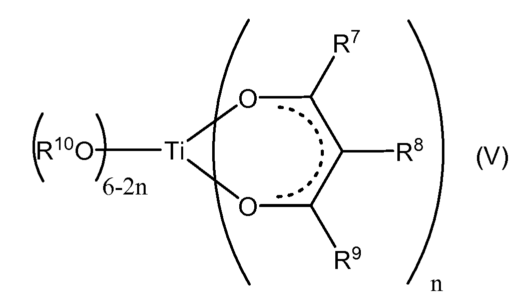 where
the radical R⁷ stands for a hydrogen atom or for a linear or branched alkyl group having 1 to 8 C atoms, more particularly for a methyl group;
the radical R⁸ stands for a hydrogen atom or for a linear or branched alkyl group having 1 to 8 C atoms which optionally contains heteroatoms, more particularly for a hydrogen atom;
the radical R⁹ stands for a hydrogen atom or for an alkyl group having 1 to 8, more particularly having 1 to 3, C atoms or for a linear or branched alkoxy group having 1 to 8, more particularly having 1 to 3, C atoms;
the radical R¹⁰ stands for a linear or branched alkyl radical having 1 to 20 C atoms, more particularly for an isobutyl or for an isopropyl radical; and n stands for a value of 1 or 2, more particularly for 2.

7. Composition according to any one of the preceding claims, **characterized in that** the fraction of the organosilane is 0.1% to 7% by weight, more particularly 0.2% to 4% by weight, preferably 0.4% to 2% by weight, of the overall composition.

8. Composition according to any one of the preceding claims, **characterized in that** the fraction of the organotitanate is 0.1 % to 10% by weight, more particularly 0.1 % to 4% by weight, preferably 0.1 % to 3% by weight, of the overall composition.

9. Composition according to any one of the preceding claims, **characterized in that** the composition further comprises at least one filler.

10. Composition according to any one of the preceding claims, **characterized in that** the fraction of the filler is 10% to 70% by weight, more particularly 15% to 60% by weight, preferably 25% to 60% by weight, of the overall composition.

11. Use of a composition according to any one of Claims 1 to 10 as an adhesive, sealant or composition for producing coatings.

12. Use according to claim 11, as an adhesive or sealant for the primerless bonding or sealing of porous substrates, more particularly of porous mineral substrates.

13. Method of adhesively bonding two substrates, **S1** and **S2,** comprising the steps of
i) applying a composition according to any one of Claims 1 to 10 to a substrate **S1** and/or a substrate **S2;**
ii) contacting the substrates **S1** and **S2** via the applied composition within the open time of the composition;
iii) curing the composition by means of water, more particularly in the form of atmospheric moisture;
the substrates **S1** and **S2** being alike or different from one another.

14. Method of sealing or coating, comprising the steps of
i') applying a composition according to any one of Claims 1 to 10 to a substrate **S1** and/or between two substrates **S1** and **S2;**
ii') curing the composition by means of water, more particularly in the form of atmospheric moisture;
the substrates **S1** and **S2** being alike or different from one another.

15. Method according to Claim 13 or 14, **characterized in that** at least one of the substrates, **S1** or **S2,** comprises concrete, mortar, brick, tile, plaster, a natural stone such as granite or marble; glass, glass ceramic, metal or metal alloy, wood, plastic or paint.

16. Article bonded, sealed or coated by a method according to any one of Claims 13 to 15.

17. Article according to Claim 16, **characterized in that** the article is a built structure, more particularly a built structure of construction or civil engineering.

## Revendications

1. Composition comprenant
a) au moins un polymère à fonctionnalité silane **P ;**
b) au moins un organosilane qui comporte au moins un atome de soufre ; ainsi que
c) au moins un organotitanate.

2. Composition selon la revendication 1, **caractérisée en ce que** le polymère **P** à fonctionnalité silane comporte des groupes terminaux de formule (I) 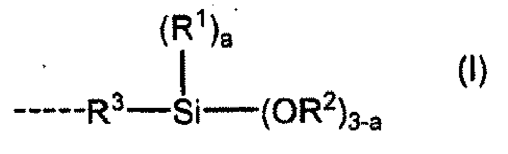 dans laquelle
R¹ représente un groupe alkyle ayant de 1 à 8 atomes de carbone, en particulier un groupe méthyle ou un groupe éthyle ;
R² représente un groupe acyle ou alkyle ayant de 1 à 5 atomes de carbone, en particulier un groupe méthyle ou un groupe éthyle ou un groupe isopropyle ;
R³ représente un groupe alkylène linéaire ou ramifié, éventuellement cyclique, ayant de 1 à 12 atomes de carbone, comportant éventuellement des fragments aromatiques et éventuellement un ou plusieurs hétéroatomes, en particulier comportant un ou plusieurs atomes d'azote ; et
a représente une valeur de 0 ou 1 ou 2, en particulier 0.

3. Composition selon l'une quelconque des revendications précédentes, **caractérisée en ce que** l'organosilane qui comporte au moins un atome de soufre est choisi dans l'ensemble constitué par les organosilanes de formule (II), les organosilanes de formule (III) et les organosilanes de formule (IV) 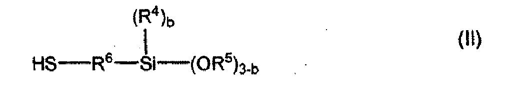 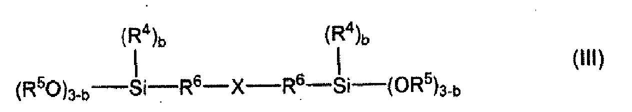 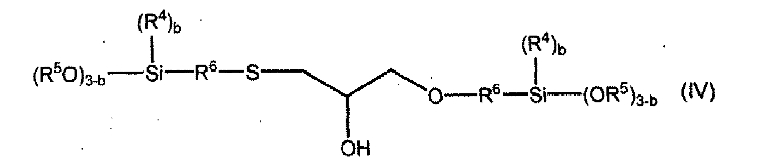 où
le radical R⁴ représente un groupe alkyle ayant de 1 à 8 atomes de carbone, en particulier un groupe méthyle ;
le radical R⁵ représente un groupe alkyle ayant de 1 à 5 atomes de carbone, en particulier un groupe méthyle ou un groupe éthyle ou un groupe isopropyle, ou un groupe acyle, en particulier un groupe acétyle ;
le radical R⁶ représente un groupe alkylène linéaire ou ramifié, éventuellement cyclique, ayant de 1 à 20 atomes de carbone, comportant éventuellement des fragments aromatiques et éventuellement un ou plusieurs hétéroatomes, en particulier des atomes d'azote ;
X représente S ou représente S₂ ou S₄ ; et
b représente une valeur de 0 ou 1 ou 2.

4. Composition selon la revendication 3, **caractérisée en ce que** l'organosilane qui comporte au moins un atome de soufre est un organosilane de formule (II),
dans laquelle
le radical R⁵ représente un groupe méthyle ou un groupe éthyle ;
le radical R⁶ représente un groupe alkylène linéaire ayant de 1 à 10, en particulier 3, atomes de carbone ; et
b représente une valeur de 0.

5. Composition selon l'une quelconque des revendications précédentes, **caractérisée en ce que** l'organotitanate comporte au moins un ligand pluridenté.

6. Composition selon la revendication 5, **caractérisée en ce que** l'organotitanate est un organotitanate de formule (V) 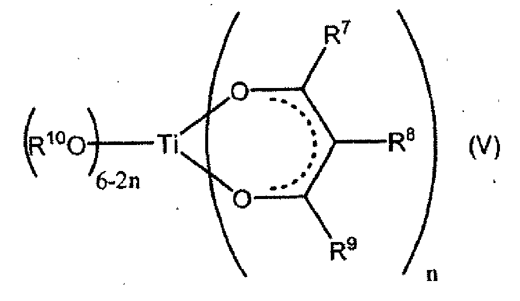 dans laquelle
le radical R ⁷ représente un atome d'hydrogène ou un groupe alkyle linéaire ou ramifié ayant de 1 à 8 atomes de carbone, en particulier un groupe méthyle ;
le radical R⁸ représente un atome d'hydrogène ou un groupe alkyle linéaire ou ramifié ayant de 1 à 8 atomes de carbone, qui éventuellement comporte des hétéroatomes, en particulier un atome d'hydrogène ;
le radical R⁹ représente un atome d'hydrogène ou un groupe alkyle ayant de 1 à 8, en particulier de 1 à 3 atomes de carbone, ou un groupe alcoxy linéaire ou ramifié ayant de 1 à 8, en particulier de 1 à 3 atomes de carbone ;
le radical R¹⁰ représente un radical alkyle linéaire ou ramifié ayant de 1 à 20 atomes de carbone, en particulier un radical isobutyle ou un radical isopropyle ; et
n représente une valeur de 1 ou 2, en particulier de 2.

7. Composition selon l'une quelconque des revendications précédentes, **caractérisée en ce que** la proportion de l'organosilane va de 0,1 à 7 % en poids, en particulier de 0,2 à 4 % en poids, de préférence de 0,4 à 2 % en poids, de la composition totale.

8. Composition selon l'une quelconque des revendications précédentes, **caractérisée en ce que** la proportion de l'organosilane va de 0,1 à 10 % en poids, en particulier de 0,1 à 4 % en poids, de préférence de 0,1 à 3 % en poids, de la composition totale.

9. Composition selon l'une quelconque des revendications précédentes, **caractérisée en ce que** la composition en outre contient au moins une charge.

10. Composition selon l'une quelconque des revendications précédentes, **caractérisée en ce que** la proportion de la charge va de 10 à 70 % en poids, en particulier de 15 à 60 % en poids, de préférence de 25 à 60 % en poids, de la composition totale.

11. Utilisation d'une composition selon l'une quelconque des revendications 1 à 10, en tant qu'adhésif, en tant que matériau d'étanchéité ou en tant que composition pour la production de revêtements.

12. Utilisation selon la revendication 11, en tant qu'adhésif ou en tant qu'adhésif ou en tant que matériau d'étanchéité pour le collage ou l'étanchéification sans primaire de substrats poreux, en particulier de substrats minéraux poreux.

13. Procédé pour le collage de deux substrats **S1** et **S2,** comprenant les étapes suivantes
i) application d'une composition selon l'une quelconque des revendications 1 à 10 sur un substrat **S1** et/ou un substrat **S2 ;**
ii) mise en contact des substrats **S1** et **S2** sur la composition appliquée, dans les limites du délai d'utilisation de la composition ;
iii) durcissement de la composition au moyen d'eau, en particulier sous forme d'humidité de l'air ;
les substrats **S1** et **S2** étant identiques ou différents l'une de l'autre.

14. Procédé pour l'étanchéification ou le revêtement, comprenant les étapes suivantes :
i') application d'une composition selon l'une quelconque des revendications 1 à 10 sur un substrat **S1** et/ou entre deux substrats **S1** et **S2 ;**
ii') durcissement de la composition au moyen d'eau, en particulier sous forme d'humidité de l'air ;
les substrats **S1** et **S2** étant identiques ou différents l'une de l'autre.

15. Procédé selon la revendication 13 ou 14, **caractérisé en ce qu'**au moins l'un des substrats **S1** ou **S2** consiste en béton, mortier, brique, tuile, plâtre, une pierre naturelle, telle que le granit ou le marbre ; verre, vitrocéramique, métal ou alliage métallique, bois, matière plastique ou peinture.

16. Article, qui a été collé, étanchéifié ou revêtu conformément à un procédé selon l'une quelconque des revendications 13 à 15.

17. Article selon la revendication 16, **caractérisé en ce que** l'article est un ouvrage de construction en surface ou souterraine.
